# EUROPEAN PATENT APPLICATION

(11) **EP 4 686 596 A1**
(43) Date of publication of application: **04.02.2026**
(21) Application number: 25187496.2
(22) Date of filing: 04.07.2025
(51) Int. Cl.: B60L 3/00, B60L 3/12, B60L 53/10, B60L 53/30, B60L 53/62, B60L 53/64, B60L 53/65, B60L 53/66, B60L 53/67, B60L 53/68, B60L 58/12, B60L 58/16, H02J 7/00

(54) **CHARGING SUPPORT SYSTEM, CHARGING SUPPORT METHOD, AND CHARGING SUPPORT PROGRAM**

(30) Priority: 29.07.2024 JP 2024122399
(71) Applicant: TOYOTA JIDOSHA KABUSHIKI KAISHA, Toyota-shi, Aichi-ken 471-8571 (JP)
(72) Inventor: CHIBA, Ryoichi, Toyota-shi, 471-8571 (JP)
(74) Representative: TBK

(57) **Abstract**

A charging support system, a charging support method, and a charging support program are provided. Information processing circuitry (10) collects vehicle information (Iv) and charger information (Ic). The charger information (Ic) relates to a charger (12) used for charging a vehicle (11). The charger (12) and the vehicle (11) in which consecutive fast charging has occurred are identified (802) based on the vehicle information (Iv) and the charger information (Ic). The consecutive fast charging includes executing fast charging a plurality of consecutive times. The charging support information (Is) is provided (808) to an information terminal (13) linked to the vehicle (11) that has undergone the consecutive fast charging. The charging support information (Is)is configured to improve usability of the charging of the vehicle (11). The charging support information (Is) is provided to the information terminal (13) through information communication using a communication network (2).

## Description

### CROSS-REFERENCE TO RELATED APPLICATIONS

This application claims priority to Japanese Patent Application No. 2024-122399, filed on July 29, 2024, the disclosure of which is hereby incorporated by reference in its entirety.

### BACKGROUND

### 1. Field

The present disclosure relates to a charging support system, a charging support method, and a charging support program.

### 2. Description of Related Art

Japanese Laid-Open Patent Publication No. 2023-148527 discloses an example of a prior-art charging control system as a technology related to charging of electric vehicles. The charging control system is configured to allow an upper limit state of charge (SOC) to be set in accordance with the user's intention. The prior art allows for selection and execution of multiple charging modes. Increasing the amount of charge per session reduces the number of charging sessions, thereby improving user convenience. Alternatively, setting the amount of charge per session to a lower level limits battery degradation. That is, improved user satisfaction is achieved by addressing user preferences.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

An aspect of the present disclosure provides a charging support system. The information processing system includes information processing circuitry. The information processing circuitry is configured to collect vehicle information that relates to a vehicle and charger information that relates to a charger used for charging the vehicle. The information processing circuitry is configured to identify, based on the vehicle information and the charger information, the charger and the vehicle in which consecutive fast charging has occurred. The consecutive fast charging includes executing fast charging a plurality of consecutive times. The information processing circuitry is configured to provide charging support information to an information terminal linked to the vehicle that has undergone the consecutive fast charging. The charging support information is configured to improve usability of the charging of the vehicle. The charging support information is provided to the information terminal through information communication using a communication network.

Another aspect of the present disclosure provides a charging support method for performing operations that are the same as those performed by the charging support system.

A further aspect of the present disclosure provides a charging support program for executing a charging support process for performing operations that are the same as those performed by the charging support method.

The above-described configurations improve the usability during charging for the user of the vehicle that has undergone consecutive fast charging.

Fast charging may be performed for an electric vehicle using a public charger as well as a private charger. A private charger is used to charge a specific vehicle with the private charger dedicated to the specific vehicle. Public chargers are installed at public charging stations. Typically, the duration of a single fast charging session using a public charger is subject to restrictions. This facilitates smooth user transition at a public charger (i.e., facilitates frequent replacement of users). There may be a case in which consecutive fast charging is performed. Consecutive fast charging is to execute fast charging a plurality of consecutive times using a single charger. Consecutive fast charging may lower the usability during charging. The above-described configurations limit a decrease in the usability during charging.

Other features and aspects will be apparent from the following detailed description, the drawings, and the claims.

### BRIEF DESCRIPTION OF THE DRAWINGS

Fig. 1 is a schematic diagram illustrating the configuration of a charging support system.
Fig. 2 is a functional block diagram illustrating the charging support system shown in Fig. 1.
Fig. 3 is a schematic diagram illustrating the configuration of the vehicle database shown in Fig. 1.
Fig. 4 is a schematic diagram illustrating the configuration of the charger database shown in Fig. 1.
Fig. 5 is a diagram illustrating the vehicle and a charging station where the charger shown in Fig. 1 has already been installed.
Fig. 6 is a diagram illustrating the consecutive fast charging performed by the charger shown in Fig. 5.
Fig. 7 is a flowchart illustrating the procedure for determining the charger that has performed the consecutive fast charging as shown in Fig. 6 and the vehicle that has undergone the consecutive fast charging.
Fig. 8 is a schematic diagram illustrating the configuration of the consecutive fast charging database shown in Fig. 1.
Fig. 9 is a flowchart illustrating the procedure for selecting the information terminal to which charging support information is provided by the charging support system shown in Fig. 2.
Fig. 10 is an alternative flowchart to Fig. 9, illustrating the procedure for selecting the information terminal to which charging support information is provided.
Fig. 11 is a functional block diagram of the cause estimation unit shown in Fig. 2.
Fig. 12 is a flowchart illustrating the procedure for the user target non-achievement determination made by the cause estimation unit shown in Fig. 11.
Fig. 13 is a flowchart illustrating the procedure for the charger output insufficiency determination made by the cause estimation unit shown in Fig. 11.
Fig. 14 is a flowchart illustrating the procedure for the malfunction occurrence determination made by the cause estimation unit shown in Fig. 11.
Fig. 15 is a flowchart illustrating the procedure for the cost-saving estimation made by the cause estimation unit shown in Fig. 11.
Fig. 16 is a flowchart illustrating the procedure for providing charging support information by the charging support system shown in Fig. 2 from the occurrence of consecutive fast charging.
Fig. 17 is a table related to the cause of the charging shown in Fig. 11, illustrating the cause, improvement information, and providing time of consecutive fast charging.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

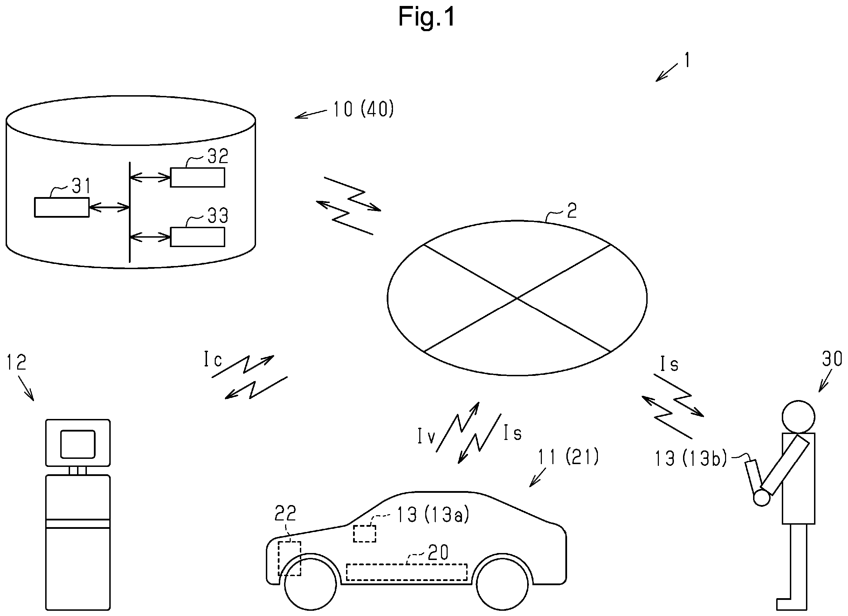

Figs. 1 to 17 illustrate a charging support system, a charging support method, a storage medium, a charging support process, a charging support program, and a charging support program product according to an embodiment.

### Charging Support System

As shown in Fig. 1, the charging support system 1 includes an information processing device 10, a vehicle 11, a charger 12, and an information terminal 13. The information processing device 10 performs information communication via a communication network 2. The information terminal 13 is linked to the vehicle 11.

The vehicle 11, which is subject to charging support by the charging support system 1, is an electric vehicle 21 that travels by motor drive using electric power stored in a battery 20 mounted on the vehicle 11. The electric vehicle 21 includes a battery electric vehicle (BEV), which operates exclusively using the electric power stored in the battery 20. Further, the electric vehicle 21 may also include other types of vehicles, such as a hybrid electric vehicle, which operates with an engine (not shown) as the driving source. Typically, the electric vehicle 21 has a regenerative function. The regenerative function allows the electric power generated by a motor (not shown) to be stored in the battery 20, for example, during braking. The charging support system 1 is designed for the vehicle 11, which is one of multiple electric vehicles 21 and functions to charge the battery 20 via the vehicle on-board charger 22. The vehicle on-board charger 22 is included in the vehicle 11. The charging support system 1 is used for a charger 12 that is installed outside the vehicle 11 and used to charge the vehicle 11.

Examples of the charger 12, which is used to charge the vehicle 11, include private chargers and public chargers. Charging with a private charger is performed in a state in which a specific vehicle 11 exclusively utilizes the private charger. For example, private chargers are installed at the home of the user 30 or in the parking lot of the company the user belongs to. Private chargers are generally used for normal charging, which takes a relatively long time. Normal charging is performed, for example, during nighttime when the user 30 does not use the vehicle 11.

Public chargers are installed in public spaces. Public chargers are installed, for example, in rest areas and parking areas along highways, at public facilities, in parking lots of commercial facilities, and along public streets. The charger 12 used as a public charger generally has a fast charging function to facilitate smooth transition between users. The fast charging function enables short-duration charging by imposing a time limit on each charging session.

In the charging support system 1 of the present embodiment, the information processing device 10 includes processing circuitry 31 and a storage device 32. The processing circuitry 31 includes one or more processors that execute a computer program (software). The processor functions as information processing circuitry that includes a CPU, a RAM, and a memory (e.g., a ROM). The storage device 32 includes a computer-readable medium accessible by a general-purpose or dedicated computer. The same applies to the memory of the processor included in the processing circuitry 31. The processing circuitry 31 of the information processing device 10 reads the computer program stored in the storage device 32 to execute various processes specified in the computer program.

Further, the information processing device 10 includes a communication device 33 that has already been connected to the communication network 2. The operation of the communication device 33 is controlled by the computer program executed by the processing circuitry 31. The information processing device 10 functions to execute information communication using the communication device 33.

In the charging support system 1 of the present embodiment, multiple vehicles 11 and multiple chargers 12 are subject to charging support provided by the charging support system 1. The vehicles 11 and the chargers 12 each have an information communication function using the communication network 2, in the same manner as the information processing device 10. Multiple information terminals 13 can be linked to each vehicle 11 in a state in which the information terminals 13 has already been connected to the communication network 2. The charging support system 1 performs charging support for multiple information terminals 13 linked to each vehicle 11. In the present embodiment, the charging support system 1 provides charging support information Is to each information terminal 13 subject to charging support. The charging support information Is improves the user experience (UX) during charging, that is, user satisfaction. In the present specification, the term "user satisfaction" may be interpreted as encompassing the concept of "usability" or being closely related thereto in the context of the charging operation. Specifically, efforts to improve usability-such as reducing the number of user operation steps, simplifying or clarifying charger selection, or providing intuitive and easy-to understand operational guidance-are considered to enhance user convenience and comfort, thereby contributing to an increase in a user satisfaction. Accordingly, references to "user satisfaction" in this specification should not be interpreted merely as subjective evaluations, but rather as indicative of, or reflective of, improvements in usability.

The configuration enabling the information communication function of each vehicle 11, each charger 12, and each information terminal 13 is the same as that of the information processing device 10. Thus, to facilitate understanding, the configuration enabling the information communication function of each vehicle 11, each charger 12, and each information terminal 13 will not be described in detail.

In the charging support system 1 of the present embodiment, the information terminal 13 linked to the vehicle 11 includes a vehicle on-board terminal 13a. The vehicle on-board terminal 13a includes, for example, a car navigation system. The information terminal 13 may include a mobile terminal (e.g., a smartphone 13b) that the user 30 carries. In the charging support system 1 of the present embodiment, one or more information processing devices 10, which have the above-described configurations, create a cloud server 40. The cloud server 40 is created by executing information communication using the communication network 2. The one or more information processing devices 10 of the charging support system 1 in the present embodiment provide the charging support information Is to the information terminal 13 linked to each vehicle 11 on the cloud server 40.

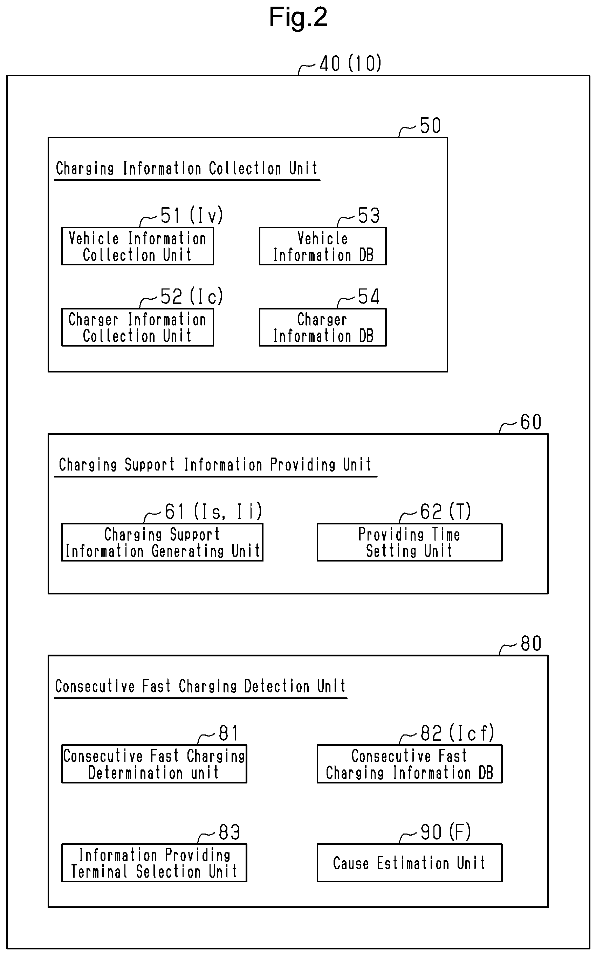

Fig. 2 is a functional block diagram of the charging support system 1. One or more information processing devices 10, which have already been connected to the communication network 2, implement the charging support system 1 on the cloud server 40. Each functional block shown in Fig. 2 represents various processes for the information processing device 10 of the charging support system 1 to provide the charging support information Is. That is, each functional block indicates the processing content executed by the processing circuitry 31 of the information processing device 10 in accordance with the computer program.

### Charging Information Collection Unit

In detail, the charging support system 1 of the present embodiment includes a charging information collection unit 50 implemented on the cloud server 40. The charging information collection unit 50 includes a vehicle information collection unit 51. The vehicle information collection unit 51 collects vehicle information Iv by executing information communication using the communication network 2. The vehicle information Iv relates to each vehicle 11 that is subject to charging support by the charging support system 1. The charging information collection unit 50 includes a charger information collection unit 52. The charger information collection unit 52 collects charger information Ic related to each charger 12 by executing information communication using the communication network 2. Further, the charging information collection unit 50 includes a vehicle database 53. The vehicle database 53 stores the vehicle information Iv that has already been collected by the vehicle information collection unit 51. In Fig. 2, DB is an abbreviation for database (the same applies to the other units including a database). The charging information collection unit 50 includes a charger database 54. The charger database 54 stores the charger information Ic that has already been collected by the charger information collection unit 52.

Specifically, the vehicle information collection unit 51 collects the basic information of each vehicle 11 as the vehicle information Iv, such as vehicle model and vehicle charging specification. Examples of the vehicle charging specification include information such as the capacity, number of cells, and type of the battery 20 installed in each vehicle 11. Examples of the vehicle charging specification further include the rated power, rated voltage, and rated current of the vehicle on-board charger 22. Additionally, the vehicle information collection unit 51 collects, as the vehicle information Iv, real-time data for each vehicle 11 that varies over time, various types of setting information related to the charging of each vehicle 11.

For example, the vehicle information collection unit 51 collects position information, traveling information, and vehicle state-of-charge (SOC) information for each vehicle 11. The vehicle information collection unit 51 collects, for example, a vehicle charge state and a vehicle charging termination cause of each vehicle 11.

The vehicle SOC information relates to, for example, the state quantity and set value concerning the SOC of the battery 20 that has been mounted on each vehicle 11. The vehicle charge state is information indicating, for example, whether the charge state of each vehicle 11 is "being charged," "has been charged", or "has not been charged." The vehicle charging termination cause is information indicating the cause for the termination of charging that has been detected in each vehicle 11. The vehicle charging termination cause includes, for example, a vehicle failure, a charger failure, and a normal termination. The vehicle charging termination cause indicates the circumstances under which the charging of vehicle 11 has ended.

The charger information collection unit 52 acquires the charger information Ic related to each charger 12, such as the position information, specification information, and usage status of the charger 12. For example, the position information of the charger 12 includes the coordinates, address, and name of each installed charger 12. Examples of the specification information of the charger 12, referred to as charger specification information, include the rated output, rated voltage, rated current, number of connector ports, type of charging, charging costs, manufacturer name, and model number for each charger 12. The usage status of the charger, referred to as the charger usage status, indicates information such as the availability information of vehicle chargers, the start time of charging, the scheduled end time of charging, and the failure status of the charger 12.

As shown in Figs. 2 to 4, the vehicle database 53 stores, for the vehicle ID of each vehicle 11, the basic information, setting information of the vehicle 11 and the like that have been collected. The basic information and setting information of each vehicle 11 have been collected by the vehicle information collection unit 51 as the vehicle information Iv. The term "vehicle ID" is referred to as a vehicle identification number (VIN). For the vehicle ID of each vehicle 11, the vehicle database 53 stores terminal information related to the information terminal 13 that has been linked to the vehicle 11. The terminal information includes, for example, the IP address and the communication protocol of the information terminal 13. That is, the terminal information includes the information for the information processing device 10, which creates the cloud server 40, to perform information communication with the information terminal 13. The information terminal 13 is linked to each vehicle 11 via the communication network 2. The charger database 54 stores, for example, the position information and specification information of each charger 12 that have been collected according to the charger ID of the charger 12. The vehicle information collection unit 51 has already collected the position information and specification information of each charger 12 as the charger information Ic.

### Charging Support Information Providing Unit

As shown in Fig. 2, the charging support system 1 of the present embodiment includes a charging support information providing unit 60 implemented on the cloud server 40. The charging support information providing unit 60 includes a charging support information generating unit 61 and a providing time setting unit 62.

The charging support information generating unit 61 generates the charging support information Is based on the vehicle information Iv and the charger information Ic that have been collected by the charging information collection unit 50. The charging support information Is is provided to the information terminal 13 that has been linked to each vehicle 11. Similarly, the providing time setting unit 62 sets a providing time T based on the vehicle information Iv and the charger information Ic that have been collected by the charging information collection unit 50. The charging support information Is is provided to each information terminal 13 at the providing time T. The charging support information Is is generated by the charging support information generating unit 61. The providing time T may be set to the point in time when a cause arises that necessitates the provision of the charging support information Is. Additionally, the providing time T may be set to occur either regularly or irregularly. The charging support information providing unit 60 identifies the information terminal 13 linked to each vehicle 11, based on the terminal information stored by the vehicle database 53. At the providing time T that has been set by the providing time setting unit 62, the charging support information providing unit 60 provides the information terminal 13 with the charging support information Is that has been generated by the charging support information generating unit 61.

### Consecutive Fast Charging

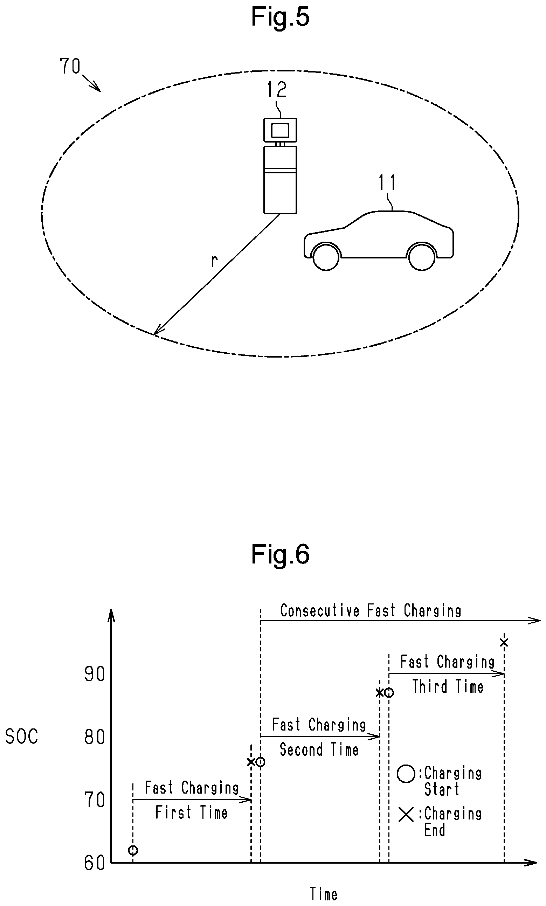

Figs. 5 and 6 illustrate the use of a charging station 70 installed in, for example, a public space. Typically, the charger 12 installed at the charging station 70 is used to perform fast charging on the vehicle 11. The charger 12 installed at the charging station 70 may be referred to as a station charger. When the charger 12 in use is a public one, consecutive fast charging may be performed using the same charger 12. During consecutive fast charging, fast charging is executed a plurality of consecutive times. For example, in the case illustrated in Fig. 6, fast charging is performed three times using the same charger 12. If consecutive fast charging becomes necessary, there is a risk that user satisfaction during the charging process may decrease.

### Consecutive Fast Charging Detection Unit

In light of this issue, as shown in Fig. 2, the charging support system 1 of the present embodiment includes a consecutive fast charging detection unit 80. The consecutive fast charging detection unit 80 is implemented on the cloud server 40. Specifically, the consecutive fast charging detection unit 80 includes a consecutive fast charging determination unit 81. The consecutive fast charging determination unit 81 identifies the vehicle 11 and the charger 12 where consecutive fast charging has occurred, based on the vehicle information Iv and the charger information Ic that have been collected by the charging information collection unit 50. The consecutive fast charging detection unit 80 includes a consecutive fast charging information database 82. The consecutive fast charging information database 82 stores information related to consecutive fast charging that has been identified by the consecutive fast charging determination unit 81, as consecutive fast charging information Icf. The consecutive fast charging detection unit 80 further includes an information providing terminal selection unit 83. The information providing terminal selection unit 83 selects the information terminal 13 to which the charging support information Is should be provided, based on the consecutive fast charging information Icf stored in the consecutive fast charging information database 82. In the charging support system 1 of the present embodiment, the charging support information providing unit 60 provides the charging support information Is to the selected information terminal 13, that is, to the user 30 of the vehicle 11 that has been linked to the selected information terminal 13.

### Identification of Vehicle and Charger in which Consecutive Fast Charging Occurred

The consecutive fast charging determination unit 81 determines whether consecutive fast charging using a station charger has been executed. The station charger refers to the charger 12 that has been installed at the charging station 70. In other words, the consecutive fast charging determination unit 81 determines whether consecutive fast charging has been executed. Further, the consecutive fast charging determination unit 81 determines whether movement of the vehicle 11 located in the charging station 70 has been detected during consecutive fast charging. In a case in which the movement of the vehicle 11 in the charging station 70 has not been detected during consecutive fast charging, the consecutive fast charging determination unit 81 determines that consecutive fast charging has been performed on the vehicle 11 using the station charger.

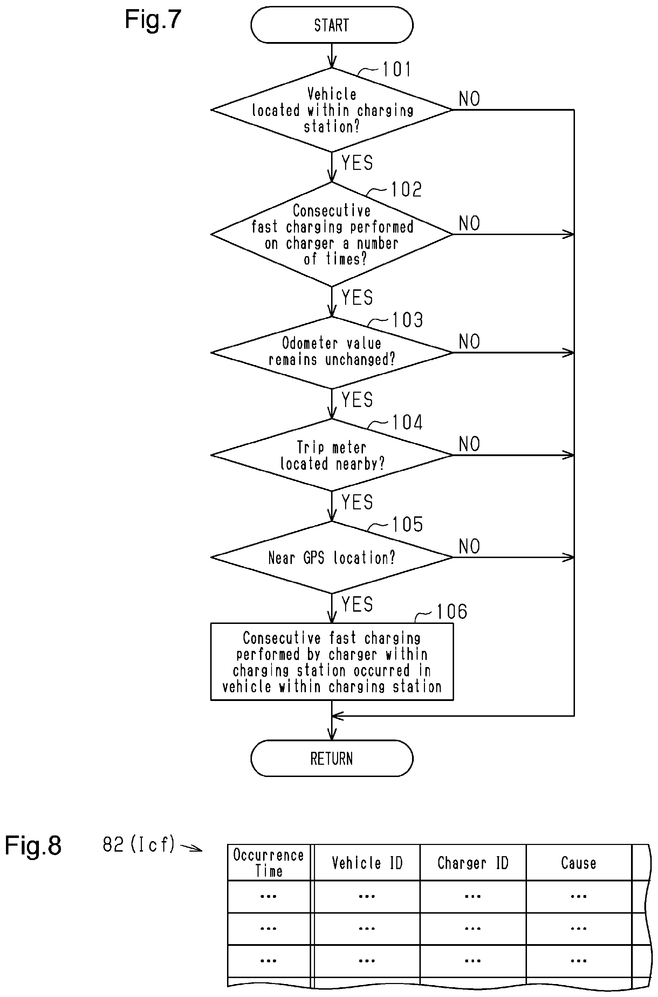

Specifically, as shown in Fig. 7, the consecutive fast charging determination unit 81 determines whether the vehicle 11 is located in the designated charging station 70 (step 101). The vehicle position determination is performed by comparing the position information of the charger 12 with the position information of the vehicle 11 that has been collected by the charging information collection unit 50. In this comparison, it is determined whether the coordinates of the vehicle 11 indicated by GPS or similar positioning information are within a predetermined radius r from the coordinates of the charger 12. When determining whether the vehicle 11 is located in the charging station 70 (step 101: YES), the consecutive fast charging determination unit 81 determines whether consecutive fast charging has been executed using a station charger (step 102). In this case, charging sessions are considered consecutive if the time interval between the end of the previous session and the start of the next one is within a predetermined duration.

Then, in a case in which consecutive fast charging has been performed using a station charger (step 102: YES), the consecutive fast charging determination unit 81 determines whether the value of an odometer (i.e., a trip meter or a cumulative travel distance indicator) has remained unchanged during the consecutive fast charging (step 103). The fact that the odometer value has remained unchanged indicates that the distance traveled has not substantially increased. The reference time point for the vehicle traveling determination includes the point in time when the initial fast charging started and the point in time when the second charging started (the same applies hereinafter). In a case in which the odometer value has remained unchanged (step 103: YES), the consecutive fast charging determination unit 81 determines that the value of the trip meter is relatively close to that obtained when the initial fast charging started (step 104). The value of the trip meter indicates the number of times the vehicle 11 has been started. In a case in which the value of the trip meter is relatively close to that obtained when the initial fast charging started (step 104: YES), the consecutive fast charging determination unit 81 determines that the coordinates of the vehicle 11 are relatively close to those obtained when the initial fast charging started (step 105). The coordinates of the vehicle 11 are indicated by, for example, GPS or similar positioning information. In a case in which the coordinates of the vehicle 11 are relatively close to those obtained when the initial fast charging started (step 105: YES), the consecutive fast charging determination unit 81 determines that consecutive fast charging has been performed on the vehicle 11 in the charging station 70 using the station charger (step 106).

### Storing Consecutive Fast Charging Information for Identified Consecutive Fast Charging

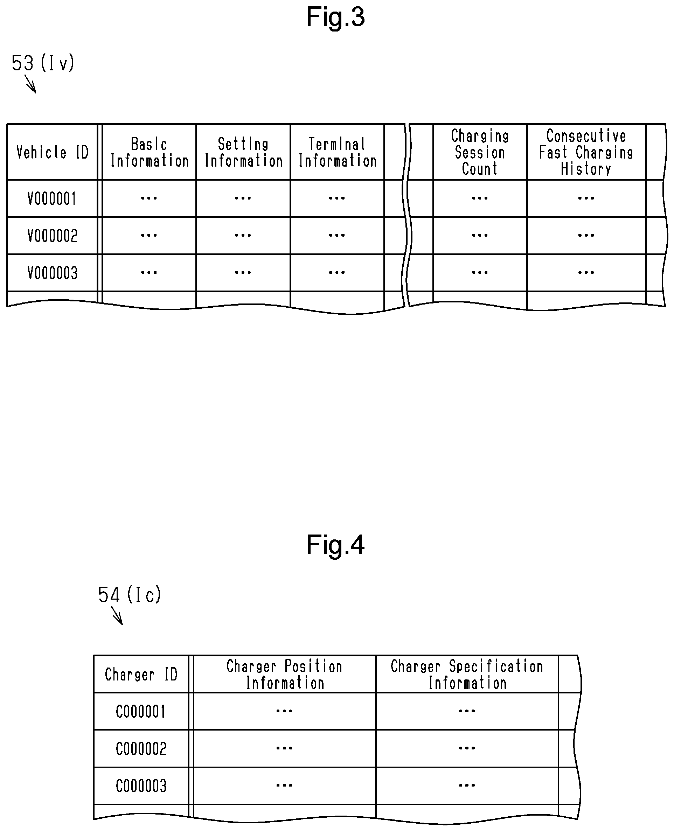

As shown in Fig. 8, the consecutive fast charging information database 82 stores the consecutive fast charging information Icf in chronological order. The consecutive fast charging information Icf indicates the information related to the consecutive fast charging that has been identified by the consecutive fast charging determination unit 81. The consecutive fast charging information Icf includes the occurrence time of consecutive fast charging, along with the vehicle ID and charger ID that have been identified. The consecutive fast charging information Icf is recorded in a consecutive fast charging history of each vehicle 11. The consecutive fast charging information Icf and the charging session count are both stored in the vehicle database 53 of the charging support information providing unit 60 (see Figs. 2 and 3). In the consecutive fast charging information Icf, one instance of consecutive fast charging is counted as a single charging session. The charging support system 1 of the present embodiment is configured to identify an instance of consecutive fast charging that has occurred in each vehicle 11 subject to the charging support provided by the charging support system 1.

### Selection of Information Terminal that Provides Charging Support Information

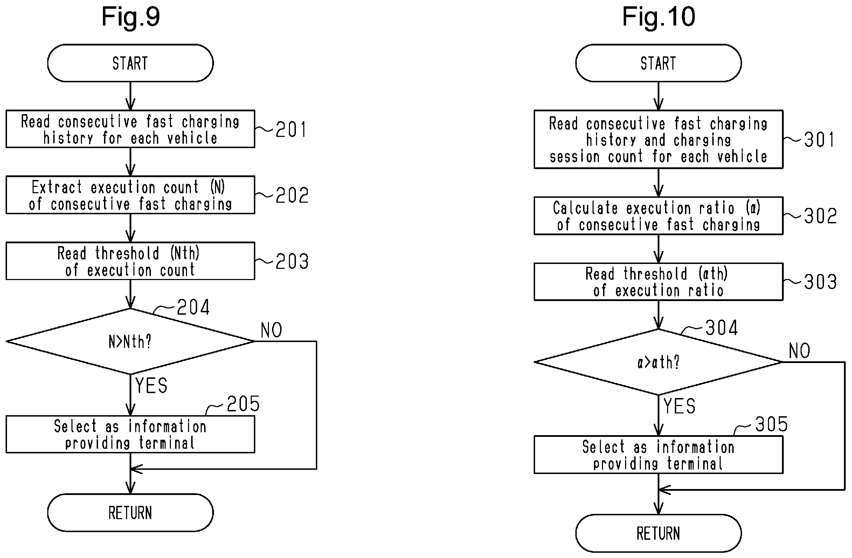

As shown in Fig. 9, the information providing terminal selection unit 83 reads the consecutive fast charging history of each vehicle 11 stored in the vehicle database 53 (step 201; also see Fig. 3). Next, the information providing terminal selection unit 83 extracts an execution count N of consecutive fast charging (i.e., consecutive fast charging sessions) that have been performed for each vehicle 11 (step 202). Then, the information providing terminal selection unit 83 reads a count threshold Nth of the execution count N from a storage area (not shown) (step 203). Further, the information providing terminal selection unit 83 determines, for each vehicle 11, whether the execution count N of consecutive fast charging sessions is greater than the count threshold Nth (step 204). When the execution count N of consecutive fast charging sessions is greater than the count threshold Nth (step 204: YES), the information providing terminal selection unit 83 selects the information terminal 13 that has been linked to the vehicle 11, as the information terminal 13 to which the charging support information Is should be provided (step 205).

As shown in Fig. 10, the information providing terminal selection unit 83 reads the consecutive fast charging history and charging session count of each vehicle 11 in Fig. 3 stored in the vehicle database 53 (step 301). Next, the information providing terminal selection unit 83 extracts an execution ratio α of consecutive fast charging sessions that have been performed for each vehicle 11 (step 302). The execution ratio α is the value obtained by dividing the execution count N of consecutive fast charging sessions by the charging session count. The information providing terminal selection unit 83 reads a ratio threshold αth of the execution ratio α from the storage area (not shown) (step 303). Further, the information providing terminal selection unit 83 determines, for each vehicle 11, whether the execution ratio α of consecutive fast charging sessions is greater than the ratio threshold αth (step 304). When the execution ratio α of consecutive fast charging sessions is greater than the ratio threshold αth (step 304: YES), the information providing terminal selection unit 83 selects the information terminal 13 that has been linked to the vehicle 11, as the information terminal 13 to which the charging support information Is should be provided (step 305).

### Estimation of Cause of Consecutive Fast Charging

As shown in Fig. 2, the consecutive fast charging detection unit 80 includes a cause estimation unit 90. The cause estimation unit 90 estimates a cause F of consecutive fast charging, based on the vehicle information Iv and the charger information Ic that have been collected by the charging information collection unit 50. In the charging support system 1 of the present embodiment, the charging support information providing unit 60 provides improvement information li to the information terminal 13 linked to the vehicle 11 that has undergone consecutive fast charging. The improvement information li relates to the cause F estimated by the cause estimation unit 90.

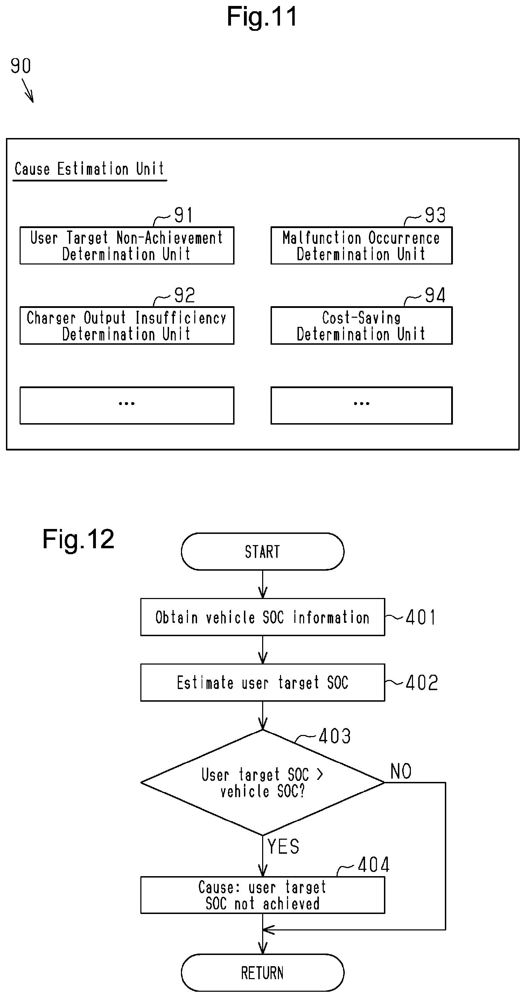

As shown in Fig. 11, the cause estimation unit 90 includes a user target non-achievement determination unit 91.

As shown in Fig. 12, the user target non-achievement determination unit 91 obtains the vehicle SOC information as the vehicle information Iv (step 401). The user target non-achievement determination unit 91 estimates the user target SOC based on the acquired vehicle SOC information (step 402). The user target SOC is a target value for charging completion used when the user 30 of the vehicle 11 that has undergone consecutive fast charging charges the vehicle 11. The user target SOC is an example of a target SOC reflecting user preferences of the vehicle 11 that has undergone the consecutive fast charging. The user preferences may include an explicitly set target SOC via a user interface, or may be inferred from historical charging behavior, driving patterns, or contextual data. For instance, if the user typically charges the battery only up to around 80%, that value may be regarded as the preferred target SOC. The optimal SOC may also be determined based on driving distance or frequency of use, while contextual information-such as location, time of day, weather, or distance to the destination-can further support dynamic and situation-aware target setting. Thus, the user target SOC is dynamically adjusted in accordance with the user's preferences and usage patterns, contributing to a more personalized charging experience.

The vehicle SOC information includes the vehicle SOC as real-time data. The vehicle SOC indicates the current value of the SOC of the battery 20 installed in each vehicle 11. Examples of the vehicle SOC information include an upper or lower limit SOC, target SOC, and average SOC that is obtained at the completion of charging. The average SOC at the completion of charging is based on historical performance data. The upper SOC is an upper-limit set value for the SOC of the battery 20 that can be charged by the vehicle 11. The lower SOC is a lower-limit set value for the SOC that can be discharged by the vehicle 11. The target SOC is a target value assigned to each vehicle 11 that specifies the required SOC level to be greater than or equal to or a specified value by a certain time during charging or discharging. The user target SOC is estimated by, for example, substituting each item that has been acquired as the vehicle SOC information into a predetermined formula.

Next, the user target non-achievement determination unit 91 compares the user target SOC estimated in step 402 with the vehicle SOC, which is real-time data (step 403). Specifically, the user target non-achievement determination unit 91 compares the user target SOC with the vehicle SOC obtained subsequent to initial charging. When the vehicle SOC subsequent to initial charging is less than the user target SOC (step 403: YES), the user target non-achievement determination unit 91 determines whether the cause F of consecutive fast charging is that the user target SOC has not been achieved (step 404).

As shown in Fig. 11, the cause estimation unit 90 includes a charger output insufficiency determination unit 92.

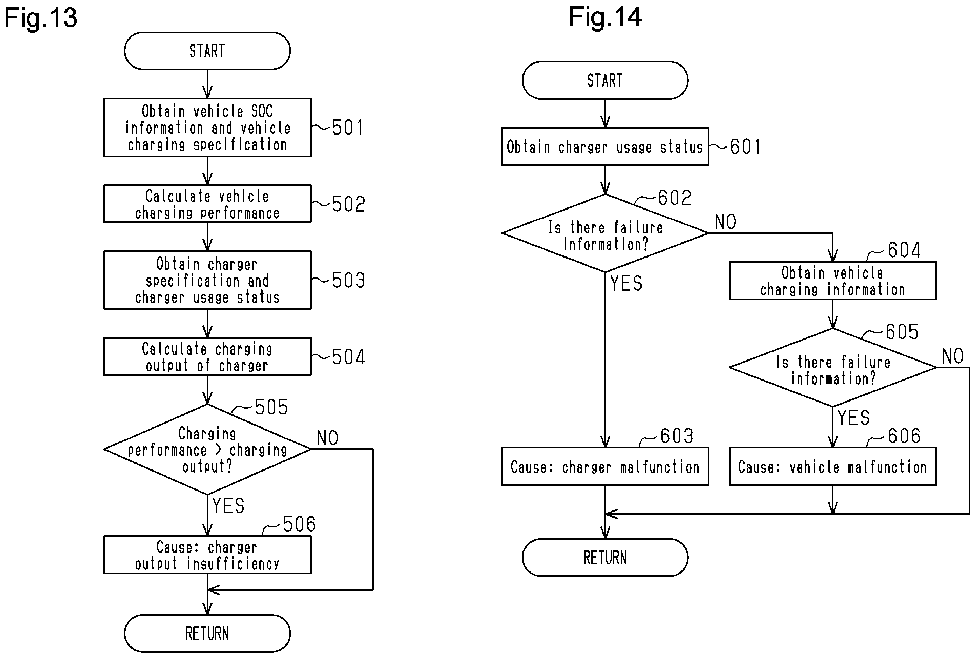

As shown in Fig. 13, the charger output insufficiency determination unit 92 obtains the vehicle SOC information and the vehicle charging specification as the vehicle information Iv (step 501). The charger output insufficiency determination unit 92 calculates the vehicle charging performance of the vehicle 11 that has undergone consecutive fast charging (step 502). The vehicle charging performance is represented by parameters such as maximum acceptance output (kW).

The charger output insufficiency determination unit 92 obtains the charger specification information and charger usage status as the charger information Ic (step 503). The available charging power of the charger 12 is identified from the charger usage status. The charger output insufficiency determination unit 92 calculates the charging output of the charger 12 that has performed consecutive fast charging (step 504).

Further, the charger output insufficiency determination unit 92 compares the vehicle charging performance of the vehicle 11 calculated in step 502 with the charging output calculated in step 504 (step 505). When the charging output of the charger 12 is lower than the vehicle charging performance of the vehicle 11 (step 505: YES), the charger output insufficiency determination unit 92 determines that the cause F of the consecutive fast charging is due to insufficient output of the charger 12 (i.e., charger output insufficiency) (step 506).

As shown in Fig. 11, the cause estimation unit 90 includes a malfunction occurrence determination unit 93.

As shown in Fig. 14, the malfunction occurrence determination unit 93 obtains the charger usage status as the charger information Ic (step 601). Further, the malfunction occurrence determination unit 93 determines whether the acquired charger usage status contains information related to a failure of the charger 12 (step 602). When determining that a failure has occurred in the charger 12 (step 602: YES), the malfunction occurrence determination unit 93 determines that the cause F of the consecutive fast charging is a malfunction that has occurred in the charger 12 (i.e., a charger malfunction) (step 603).

The malfunction occurrence determination unit 93 acquires a vehicle charging termination cause as the vehicle information Iv (step 604). Further, the malfunction occurrence determination unit 93 determines whether the acquired vehicle charging termination cause contains information related to a failure in the vehicle on-board charger 22 (step 605). When determining that a failure has occurred in the vehicle on-board charger 22 (step 605: YES), the malfunction occurrence determination unit 93 determines that the cause F of the consecutive fast charging is a malfunction that has occurred in the vehicle 11 (i.e., a vehicle malfunction) (step 606).

As shown in Fig. 11, the cause estimation unit 90 includes a cost-saving estimation unit 94.

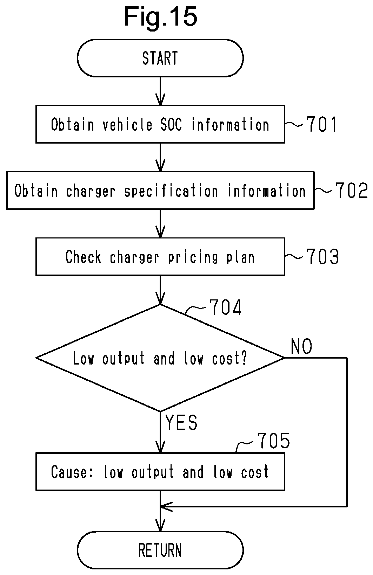

As shown in Fig. 15, the cost-saving estimation unit 94 obtains the vehicle SOC information as the vehicle information Iv (step 701). The cost-saving estimation unit 94 acquires the charger specification information as the charger information Ic (step 702). Next, the cost-saving estimation unit 94 checks the pricing plan applied to the user 30 when he uses the charger 12 that has performed consecutive fast charging, based on the charger specification information (step 703). The pricing plan specifies the usage costs for the charger 12. The cost-saving estimation unit 94 determines whether the pricing plan for using the charger 12 is characterized by a relatively low output and a relatively low cost (i.e., low output and low cost) (step 704). When determining that the pricing plan is characterized by low output and low cost (step 704: YES), the cost-saving estimation unit 94 determines that the pricing plan characterized by low output and low cost is the cause F of the consecutive fast charging (step 705).

### Procedure for Providing Charging Support Information from Occurrence of Consecutive Fast Charging

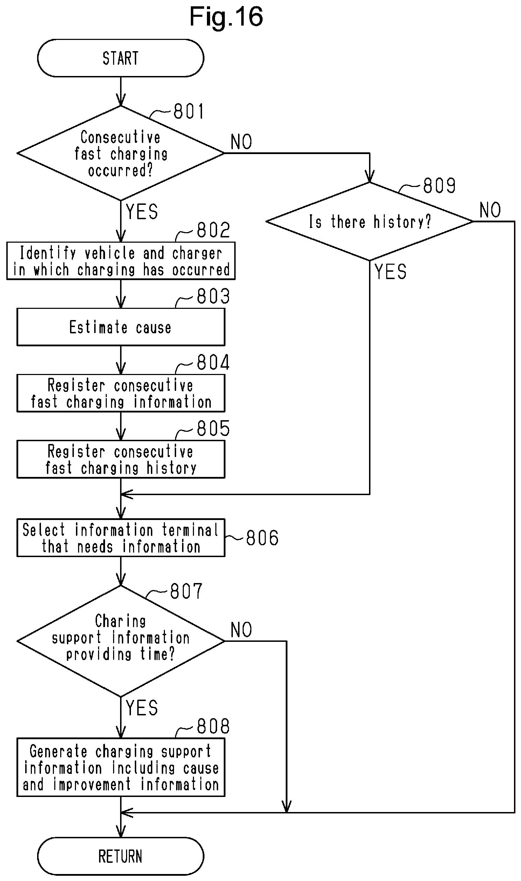

Fig. 16 illustrates the process flow in the case of consecutive fast charging that has occurred in any one of the vehicles 11 subject to charging support by the charging support system 1 (step 801: YES). In this case, the consecutive fast charging determination unit 81 of the consecutive fast charging detection unit 80 identifies the vehicle 11 and the charger 12 (step 802). Next, the cause estimation unit 90 estimates the cause F of consecutive fast charging (step 803). Thus, the generated consecutive fast charging information Icf is registered in the consecutive fast charging information database 82 (step 804). Further, the consecutive fast charging history is registered in the vehicle database 53 of the charging information collection unit 50 (step 805).

Next, the information providing terminal selection unit 83 selects the information terminal 13 to which the charging support information Is should be provided (step 806). In the charging support information providing unit 60, the providing time setting unit 62 determines whether the current time is the providing time T for the charging support information Is corresponding to the cause F of the consecutive fast charging (step 807). When the current time is the providing time T for the charging support information Is (step 807: YES), the charging support information generating unit 61 generates the charging support information Is (step 808). The charging support information includes the cause F of the consecutive fast charging and the improvement information li. In the charging support system 1 of the present embodiment, the cause F and improvement information li are provided to the information terminal 13 linked to vehicle 11 that has undergone consecutive fast charging.

In the charging support system 1 of the present embodiment, the processes of steps 806 to 808 are executed at a time other than immediately after consecutive fast charging occurs, based on the consecutive fast charging history (step 801: NO and step 809: YES). This allows the charging support information Is to be regularly or irregularly provided to the information terminal 13 that has been linked to the vehicle 11 having the consecutive fast charging history. The charging support information includes the cause F of the consecutive fast charging and the improvement information li.

### Cause, Improvement Information, and Providing Time

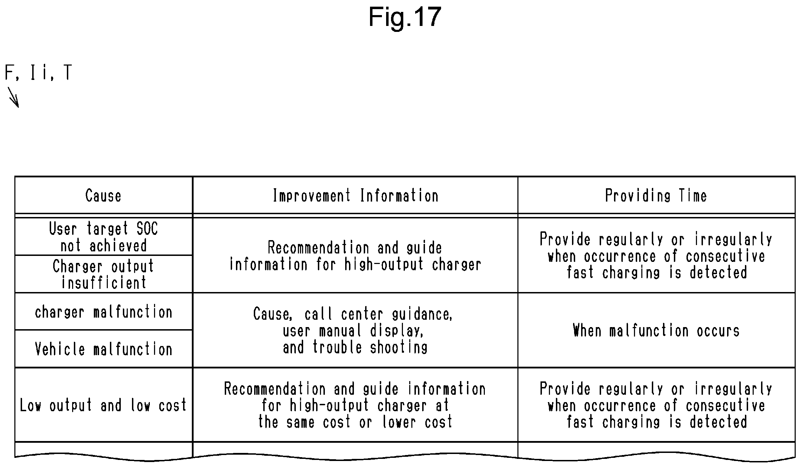

As shown in Fig. 17, for example, when the cause F of consecutive fast charging is that the user target SOC has not been achieved, the charging support information providing unit 60 provides charging support information Is to the information terminal 13 as the improvement information li. The charging support information Is includes a recommendation of a high-output charger and guidance information for guidance to the high-output charger. Specifically, the charging support information Is includes a recommendation of using a different charger 12 having a higher charging output than that of the charger 12 that has performed consecutive fast charging. The guidance information for guidance to the high-output charger includes, for example, the charging output of the high-output charger, the installation location of the high-output charger, and the route to reach the high-output charger. When the cause F of consecutive fast charging is that the user target SOC has not been achieved, the providing time T for the providing charging support information Is is not limited to the time of detecting the occurrence of consecutive fast charging. That is, the providing time T may be set to be regular or irregular. Examples of the regular providing time T may include a specific day of each month and a specific time on a specific day of the week. Examples of the irregular providing time T include a case in which the SOC of the battery 20 has decreased (i.e., charging is necessary).

Further, when the cause F of consecutive fast charging is that the charger output is insufficient, the charging support information providing unit 60 provides the same charging support information Is to the information terminal 13 as the improvement information li. That is, the charging support information includes a recommendation of a high-output charger and guidance information for guidance to the high-output charger. In the same manner as the providing time T for the charging support information Is, the providing time T is not limited to the time of detecting the occurrence of consecutive fast charging, and may be set to be regular or irregular.

When the cause F of consecutive fast charging is a charger malfunction or a vehicle malfunction, the charging support information providing unit 60 provides the improvement information li as the charging support information Is to the information terminal 13. In this case, the improvement information li includes not only the cause of consecutive fast charging but also, for example, guidance from a call center, display of a user manual, and troubleshooting. Further, in this case, the providing time T for the charging support information Is is the time when a malfunction occurs. In this case, regardless of the execution count N and the execution ratio α of consecutive fast charging sessions respectively shown in Fig. 9 and Fig. 10, the information terminal 13 linked to the vehicle 11 that has undergone a charging malfunction is selected as the information terminal 13 to which the improvement information li should be provided.

Similarly, when the cause F of consecutive fast charging is a pricing plan characterized by low output and low cost, the charging support information providing unit 60 provides the charging support information Is including improvement information li to the information terminal 13. Specifically, the improvement information li includes guidance information for guidance to another charger 12 having a pricing than different from that of the charger 12 that has performed consecutive fast charging. For example, the guidance information includes a recommendation of a high-output charger 12 having a cost that is the same as or lower than the cost of the charger 12 that has performed consecutive fast charging. The charging support information Is that includes the guidance information is provided to the information terminal 13. In this case, the providing time T for the charging support information Is is not limited to the time of detecting the occurrence of consecutive fast charging and may be set to be regular or irregular. In the present specification, the term "charging fee structure" may be used interchangeably with "pricing plan"or "pricing structure" to refer to a model or scheme that defines how a user is charged for using a charger. This may include, for example, flat-rate pricing, time-based pricing, energy-based pricing (e.g., per kWh), or dynamic pricing based on demand, time of day, or charger output level. These pricing models may be applied individually or in combination, allowing for flexible fee structures tailored to user convenience and operational efficiency.

### Operation of the Present Embodiment

In the charging support system 1, the information processing device 10 that has been connected to the communication network 2 performs information communication with the vehicle 11, the charger 12, and the information terminal 13 via the communication network 2. The information terminal 13 is linked to the vehicle 11. The information processing device 10 collects the vehicle information Iv and the charger information Ic. The vehicle information Iv relates to the vehicle 11. The charger information Ic relates to the charger 12 used for charging the vehicle 11. The information processing device 10 identifies the charger 12 and the vehicle 11 in which consecutive fast charging has occurred, based on the vehicle information Iv and the charger information Ic. Thus, the information processing device 10 provides the charging support information Is to the information terminal 13 linked to the vehicle 11 that has undergone consecutive fast charging.

### Advantages of the Present Embodiment

The advantages of the present embodiment will now be described.
(1) The user 30 of the vehicle 11 that has undergone consecutive fast charging may experience a decrease in usability during charging. To solve this problem, the present embodiment provides the charging support information Is to the information terminal 13 linked to the vehicle 11 that has undergone consecutive fast charging. This effectively improves the usability during charging for the user 30 of the vehicle 11 that has undergone consecutive fast charging.
(2) The information processing device 10 estimates the cause F of consecutive fast charging based on at least one of the vehicle information Iv or the charger information Ic. The information processing device 10 provides the improvement information li related to improving usability based on for the cause F of the consecutive fast charging, as the charging support information Is, to the information terminal 13 linked to the vehicle 11 that has undergone consecutive fast charging.
   This configuration improves situations where consecutive fast charging occurs. This effectively improves the usability during charging.
(3) The information processing device 10 estimates the target SOC of the vehicle 11 that has undergone consecutive fast charging. When the vehicle SOC subsequent to initial charging is less than the target SOC, the information processing device 10 provides improvement information li. This improvement information li includes guidance information for guidance to a different charger 12 that has a higher charging output than the charging output of the charger 12 that has performed consecutive fast charging.
   This configuration improves situations where consecutive fast charging results from a failure to reach the target SOC. This effectively improves the usability during charging.
(4) When the charging output of the charger 12 that has performed consecutive fast charging is lower than the vehicle charging performance of the vehicle 11 that has undergone the consecutive fast charging, the information processing device 10 provides improvement information li. This improvement information li includes guidance information for guidance to a different charger 12 that has a higher charging output than the charging output of the charger 12. In other words, the guidance information includes information for guidance to a high-output charger. The charging output of the high-output charger is higher than that of the charger that has performed the consecutive fast charging.
   This configuration improves situations where consecutive fast charging results from the insufficiency of output from the charger 12. This effectively improves the usability during charging.
(5) The information processing device 10 detects a charging malfunction that occurred during charging of the vehicle 11 that has undergone consecutive fast charging. The information processing device 10 provides the cause of the charging malfunction, as the improvement information li, to the information terminal 13 linked to the vehicle 11 that has undergone consecutive fast charging.
   This configuration quickly improves situations where consecutive fast charging results from a charging malfunction. This effectively improves the usability during charging.
(6) When the pricing structure for the charger 12 that has performed consecutive fast charging is characterized by low cost and low output, the information processing device 10 provides improvement information li. This improvement information li includes guidance information for guidance to another charger 12 having a pricing structure different from that of the charger 12 that has performed consecutive fast charging. That is, the improvement information li includes guidance information for guidance to a charger with a different usage cost (hereinafter referred to as a different-pricing charger). The pricing structure for the different-pricing charger is different from that of the charger that has performed consecutive fast charging. In other words, the improvement information li includes guidance information for navigating to a charger having a charging fee structure different from that of the charger having performed the consecutive fast charging when the charger having performed the consecutive fast charging has a relatively low cost and a relatively low output.
   This configuration improves situations where consecutive fast charging results from the charging output of the charger 12 and the pricing plan of the charger 12. The pricing plan relates to the pricing structure for the charger 12. This effectively improves the usability during charging.
(7) The information processing device 10 determines whether consecutive fast charging using a station charger has been executed. The station charger refers to the charger 12 that has been installed at the charging station 70. Further, the information processing device 10 determines whether movement of the vehicle 11 located in the charging station 70 has been detected during consecutive fast charging. In a case in which the movement of the vehicle 11 located in the charging station 70 has not been detected during consecutive fast charging, the information processing device 10 determines that consecutive fast charging has been performed on the vehicle 11 using the station charger.
   This allows the vehicle 11 that has undergone consecutive fast charging to be accurately identified while associating it with the charger 12 used for the consecutive fast charging. Thus, the charging support information Is that improves the usability during charging is more effectively provided to the information terminal 13 linked to the vehicle 11.
(8) The information processing device 10 provides support information Is to the information terminal 13 linked to the vehicle 11 in which the execution count N of consecutive fast charging sessions is greater than the count threshold Nth.
(9) The information processing device 10 provides the charging support information Is to the information terminal 13 linked to the vehicle 11 in which the execution ratio α of consecutive fast charging sessions is greater than the ratio threshold αth.

In these configurations, the charging support information Is is provided. This allows the information terminal 13 that improves the usability during charging to be more effectively selected from multiple information terminals 13 linked to the vehicle 11 that has undergone consecutive fast charging.

### Modifications

The above-described embodiment can be modified and implemented as follows. The above-described embodiment and the following modification examples can be implemented in combination with each other to the extent that they do not contradict each other technically.

In the above-described embodiment, the cause F of consecutive fast charging based on at least one of the vehicle information Iv or the charger information Ic. The information processing device 10 provides the improvement information li related to improving usability based on the cause F of the consecutive fast charging, as the charging support information Is, to the information terminal 13 linked to the vehicle 11 that has undergone consecutive fast charging. However, the provision of charging support information Is does not have to be based on the estimation of the cause F and the provision of improvement information li.

For example, when there is no charging malfunction, the cause F does not have to be estimated. However, the information terminal 13 may be provided with guidance information for guidance to a different charger 12 having a higher charging output than the charging output of the charger 12 that has performed consecutive fast charging. Using a high-output charger with a high charging output is likely to reduce the number of consecutive fast charging sessions. In the same manner as the above-described embodiment, such a configuration effectively improves usability during charging for the user 30 who charges the vehicle 11 that has undergone consecutive fast charging.

In addition to the cause F and the improvement information li, other elements that are likely to improve usability during charging may be combined with each other to generate the charging support information Is. The charging support information Is may be provided to the information terminal 13 linked to the vehicle 11 that has undergone consecutive fast charging.

To select the information terminal 13 to which the charging support information Is is provided, any period of the consecutive fast charging history may be set to calculate the execution count N of consecutive fast charging sessions as shown in Fig. 9 and/or the execution ratio α as shown in Fig. 10. For example, the consecutive fast charging history may be set to a past period of several weeks or months.

Based on the execution count N of consecutive fast charging sessions as shown in Fig. 9 and the execution ratio α as shown in Fig. 10, the information terminal 13 that provides the charging support information Is may be selected.

Based on the cause F of consecutive fast charging, each of the count threshold Nth and the ratio threshold αth may be changed. This allows the information terminal 13 that improves the usability during charging (i.e., the user 30 of the vehicle 11 linked to the information terminal 13) to be accurately selected with a simple configuration.

In the above-described embodiment, in a case in which the charger 12 that has performed consecutive fast charging is characterized by low output and low cost, guidance information is provided. This guidance information provides guidance to a high-output charger 12 at the cost that is the same as or lower than the cost of the charger 12 that has performed consecutive fast charging. Instead, if the charging usability of the user 30 of the vehicle 11 that has undergone consecutive fast charging can be improved, other chargers 12 that provide guidance information may be set. For example, a charger 12 having the pricing plan characterized by a remarkably high output may be introduced.

To identify the vehicle 11 and the charger 12 in which consecutive fast charging has occurred, the condition for determining that no movement of the vehicle 11 located in the charging station 70 has been detected during the consecutive fast charging may be changed.

For example, in the above-described embodiment, as shown in Fig. 7, the condition for determining that the vehicle 11 has not moved is that the odometer value remains the same (step 103: YES), the trip meter remains within a proximate range (step 104: YES), and the coordinates of the vehicle 11 remain within a proximate range (step 105: YES). Instead, it may be determined that the vehicle 11 has not moved within the charging station 70 based on at least one or any combination of these determination conditions. The reference for the vehicle traveling determination is not limited to setting the point in time when the initial fast charging started and the point in time when the second charging started. The point in time of the third or subsequent fast charging sessions may be used as a reference for the determining vehicle movement. Other determination conditions may be used to determine that the movement of the vehicle 11 has not been detected.

When the vehicle 11 subject to charging support by the charging support system 1 is a hybrid electric vehicle, any type of the hybrid electric vehicle may be used. The vehicle 11 may be an electric vehicle 21 that travels using the electric power stored in the battery 20 through charging. That is, the vehicle 11 may have the configuration of a plug-in hybrid electric vehicle. The vehicle 11 is not limited to one that travels by engine driving, such as transmitting driving force from an engine to the road surface. The vehicle 11 may be an electric vehicle 21 that travels by motor drive using the electric power generated by using the engine as the driving source for the power generator.

The charging support system 1 of the present disclosure may be a single device. The charging support system 1 may be distributed across multiple devices or subsystems that cooperate with each other to execute a program.

One or more processors of the processing circuitry 31 may include a central processing unit (CPU), a graphics processing unit (GPU), an accelerated processing unit (APU), and an neural network processing unit (NPU). The one or more processors may include a microprocessor, a microcontroller, a digital signal processor (DSP), a field-programmable gate array (FPGA), and a complex programmable logic device (CPLD). The one or more processors may include an application-specific integrated circuit (ASIC), another processor that includes a general-purpose processor, a processor designed to execute the functions described in the present specification, or any combination thereof. However, this configuration does not have to be employed. The one or more processors used in the components enabling the information communication function of each vehicle 11, each charger 12, and each information terminal 13 may also be modified accordingly.

The information processing device including the processing circuitry 31 is not limited to a device that includes a CPU and a ROM and executes software processing. That is, the information processing device may have any one of the following configurations (a), (b), and (c).

(a) The information processing device includes one or more processors that execute various processes according to computer programs. The processor includes a CPU and a memory, such as a RAM and ROM. The memory stores program codes or instructions configured to cause the CPU to execute the processes. The memory, or a non-transitory computer-readable storage medium, includes any type of media that are accessible by general-purpose computers and dedicated computers.

(b) The information processing device includes one or more dedicated hardware circuits that execute various processes. Examples of the dedicated hardware circuits include an application-specific integrated circuit (ASIC) and a field programmable gate array (FPGA).

(c) The information processing device includes a processor that executes part of various processes according to a computer program and a dedicated hardware circuit that executes the remaining processes.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A charging support system comprising information processing circuitry (10) configured to execute:
collecting vehicle information (Iv) and charger information (Ic), wherein the vehicle information (Iv) relates to a vehicle (11), and the charger information (Ic) relates to a charger (12) used for charging the vehicle (11);
identifying (802), based on the vehicle information (Iv) and the charger information (Ic), the charger (12) and the vehicle (11) in which consecutive fast charging has occurred, wherein the consecutive fast charging includes executing fast charging a plurality of consecutive times; and
providing (808) charging support information (Is) to an information terminal (13) linked to the vehicle (11) that has undergone the consecutive fast charging, wherein the charging support information (Is) is configured to improve usability of the charging of the vehicle (11), and the charging support information (Is) is provided to the information terminal (13) through information communication using a communication network (2).

2. The charging support system according to claim 1, wherein
the charging support information includes guidance information for guidance to a high-output charger, and
a charging output of the high-output charger is higher than a charging output of the charger (12) that has performed the consecutive fast charging.

3. The charging support system according to claim 1 or 2, wherein
the information processing circuitry (10) is configured to estimate a cause of the consecutive fast charging based on at least one of the vehicle information (Iv) or the charger information (Ic), and
the charging support information (Is) includes improvement information (li) related to improving usability based on the cause of the consecutive fast charging.

4. The charging support system according to claim 3, wherein
the information processing circuitry (10) is configured to estimate a target SOC (402) reflecting user preferences of the vehicle (11) that has undergone the consecutive fast charging, and
the improvement information (li) includes guidance information (404) for guidance to a high-output charger when a vehicle SOC (401) obtained after initial charging does not satisfy the estimated target SOC (402) (403: NO), and a charging output of the high-output charger is higher than a charging output of the charger (12) that has performed the consecutive fast charging.

5. The charging support system according to claim 3 or 4, wherein
the improvement information (li) includes guidance information (506) for guidance to a high-output charger when a charging output (504) of the charger (12) that has performed the consecutive fast charging is lower than a charging performance (502) of the vehicle (11) that has undergone the consecutive fast charging (505: YES), and
a charging output of the high-output charger is higher than a charging output of the charger (12) that has performed the consecutive fast charging.

6. The charging support system according to any one of claims 3 to 5, wherein
a charging malfunction occurred during the charging of the vehicle (11) that has undergone the consecutive fast charging,
the information processing circuitry (10) is configured to detect (603; 606) the charging malfunction, and
the improvement information (li) includes a cause of the charging malfunction.

7. The charging support system according to any one of claims 3 to 6, wherein
the improvement information (li) includes guidance information for navigating to a charger having a charging fee structure different from that of the charger (12) having performed the consecutive fast charging when the charger having performed the consecutive fast charging has a relatively low cost and a relatively low output (704: YES).

8. The charging support system according to any one of claims 1 to 7, wherein
the charger (12) is installed at a charging station (70), and
the information processing circuitry (10) is configured to determine (106) that the consecutive fast charging has been performed for the vehicle (11) located in the charging station (70) using the charger (12) located in the charging station (70) when the charger (12) arranged in the charging station (70) is used to perform the consecutive fast charging (102: YES) and movement of the vehicle (11) located in the charging station (70) has not been detected during the consecutive fast charging (103 to 105: YES).

9. The charging support system according to any one of claims 1 to 8, wherein
a count threshold (Nth) for an execution count (N) of the consecutive fast charging is set for the vehicle (11) (203), and
the information processing circuitry (10) is configured to provide (205) the charging support information (Is) to the information terminal (13) linked to the vehicle (11) that has the execution count (N) of the consecutive fast charging being greater than the count threshold (Nth) (204: YES).

10. The charging support system according to any one of claims 1 to 9, wherein
a ratio threshold (αth) for an execution ratio (α) of the consecutive fast charging is set for the vehicle (11) (303), and
the information processing circuitry (10) is configured to provide (305) the charging support information (Is) to the information terminal (13) linked to the vehicle (11) that has the execution ratio (α) of the consecutive fast charging being greater than the ratio threshold (αth) (304: YES).

11. A charging support method executed by an information processing circuitry (10), the charging support method comprising:
collecting vehicle information (Iv) and charger information (Ic), wherein the vehicle information (Iv) relates to a vehicle (11), and the charger information (Ic) relates to a charger (12) used for charging the vehicle (11);
identifying, based on the vehicle information (Iv) and the charger information (Ic), the charger (12) and the vehicle (11) in which consecutive fast charging has occurred, wherein the consecutive fast charging includes executing fast charging a plurality of consecutive times; and
providing charging support information (Is) to an information terminal (13) linked to the vehicle (11) that has undergone the consecutive fast charging, wherein the charging support information (Is) is configured to improve usability of the charging of the vehicle (11), and the charging support information (Is) is provided to the information terminal (13) through information communication using a communication network (2).

12. A charging support program for causing information processing circuitry (10) to execute a charging support process, the charging support process comprising:
collecting vehicle information (Iv) and charger information (Ic), wherein the vehicle information (Iv) relates to a vehicle (11), and the charger information (Ic) relates to a charger (12) used for charging the vehicle (11);
identifying, based on the vehicle information (Iv) and the charger information (Ic), the charger (12) and the vehicle (11) in which consecutive fast charging has occurred, wherein the consecutive fast charging includes executing fast charging a plurality of consecutive times; and
providing charging support information (Is) to an information terminal (13) linked to the vehicle (11) that has undergone the consecutive fast charging, wherein the charging support information (Is) is configured to improve usability of the charging of the vehicle (11), and the charging support information (Is) is provided to the information terminal (13) through information communication using a communication network (2).
